# EUROPEAN PATENT APPLICATION

(11) **EP 1 801 453 A1**
(43) Date of publication of application: **27.06.2007**
(21) Application number: 05112684.5
(22) Date of filing: 22.12.2005
(51) Int. Cl.: F16G 13/06, F16H 7/06

(54) **Chain transmission**

(71) Applicant: Korse, Theodorus Henricus Johannes Carolina, 2724 CJ Zoetermeer (NL)
(72) Inventor: Korse, Theodorus Henricus Johannes Carolina, 2724 CJ Zoetermeer (NL)
(74) Representative: Uittenbogaart, Gustaaf Adolf

(57) **Abstract**

The invention concerns a chain transmission comprising a chain (3) with chain bushes (1) and link plates (2,4) having towards an end side (16) of the link plate a prismatic cam surface (15) more or less parallel to the link axis (13). The chain transmission further comprises a sprocket wheel (9) with at least two cylindrical support surfaces (8) for supporting the cam surfaces (15) of the chain links (2,4) on both sides of the chain bush. In accordance with the invention the cam surface (15) ends in a convex plane (27) with near the end side (16) an increasing slope angle (β) with the link axis (13) whereby the slope angle (β) is from zero to approximately ten to fifteen degrees. Preferably the radius of curvature (R_{c}) of the convex plane (27) is equal to or larger than half of the distance (d) from the pivot axis (6) to the cam surface (15) in a direction perpendicular to the link axis (13).

## Description

The invention concerns a chain transmission according to the preamble of claim 1. Such a chain transmission is known from WO03093700. The disadvantage of the known transmission is that leaving out the straight guide that supports the prismatic cam surfaces of the chain links before being supported by the cylindrical support surface, for instance in order to save costs, can cause wear on the corners of the cam surfaces. This unacceptable wear is caused by the impact of the edge of the cam surface at the end of the chain link on the cylindrical support when the impact creates a too high stress level in the material.

In order to reduce the wear in the impact area of the cam surface the chain transmission is according to the characterizing part of claim 1. It is found that the impact between the chain links and the cylindrical support surfaces occurs at a location where the cam surface and the cylindrical support surface are parallel. The impact area on the cylindrical support surface is limited to the area which makes an angle between zero and ten to fifteen degrees with a line perpendicular to the path of the pitch axis of a chain link when it approaches the cylindrical support surface. The impact area on the prismatic cam surface is at the impact location parallel to the impact area on the cylindrical support surface and for this reason the impact area on the cam surface will have a corresponding angle with the path of the pitch axis. As the path of the pitch axis and the link axis are more or less parallel the surface of the impact area on the chain link makes an angle between zero and ten to fifteen degrees with the link axis. By having the chain link in accordance with claim 1 the curvature radius of the impact area of the cam surface can be increased considerably whereby this does not lead to diminishing of the support the cam surface gives to the chain link so that an increase in the chordal movement of the chain is avoided. This possible increase of curvature radius leads to a strong reduction in the Hertz' contact stress so that excessive stress and deformation of the chain link is avoided.

In accordance with an embodiment the chain transmission is in accordance with claim 2. Making the radius of curvature approximately a quarter to half of the width of a chain link the cam surface makes it significantly larger than the fillet radius so that the Hertz' contact stress is acceptable.

In accordance with an embodiment the chain transmission is in accordance with claim 3. This leads to a further increase in the curvature radius on the chain link and further reduction of the Hertz' contact stress.

In accordance with an embodiment the chain transmission is in accordance with claim 4. In this way the prismatic cam surface supports the chain link directly at its end, whereby due to the convex plane the corner itself does not collide with the cylindrical support surface.

In accordance with an embodiment the chain transmission is in accordance with claim 5. In this way in stamping tools used for making the chain links sharp corners can be avoided so that tool life is increased.

In accordance with an embodiment the chain transmission is in accordance with claim 6. In this way the chain links are made asymmetrical, so improving the support of the chain links in the area where the chain links move towards a sprocket wheel, whereby it is accepted that an increase in the chordal action occurs in the area where the chain links move from a sprocket wheel.

In accordance with an embodiment the chain transmission is in accordance with claim 7. This makes sure that the pin axes follow a straight path.

The invention is now explained by describing several embodiments of the invention using a drawing. In the drawing
Figure 1 shows a section I-I of a sprocket wheel with a chain,
Figure 2 shows a side view of the sprocket wheel and the chain of figure 1,
Figure 3 shows a partial top view of the sprocket wheel and the chain of figures 1 and 2,
Figure 4 shows an outside contour of an embodiment of a chain link according to the prior art,
Figure 5 shows a schematic side view of a sprocket wheel with a chain having the chain links of figure 4,
Figure 6 shows an outside contour of a first embodiment of a chain link according to the invention,
Figure 7 shows a schematic side view of a sprocket wheel with a chain having the chain links of figure 6,
Figure 8 shows an outside contour of a second embodiment of a chain link according to the invention,
Figure 9 shows a schematic side view of a sprocket wheel with a chain having the chain links of figure 8,
Figure 10 shows an outside contour of a third embodiment of a chain link according to the invention,
Figure 11 shows a schematic side view of a sprocket wheel with a chain having the chain links of figure 10,
Figure 12 shows a side view of a fourth embodiment of a chain link according to the invention, and
Figure 13 shows a schematic side view of a sprocket wheel with a chain having the chain links of figure 12.

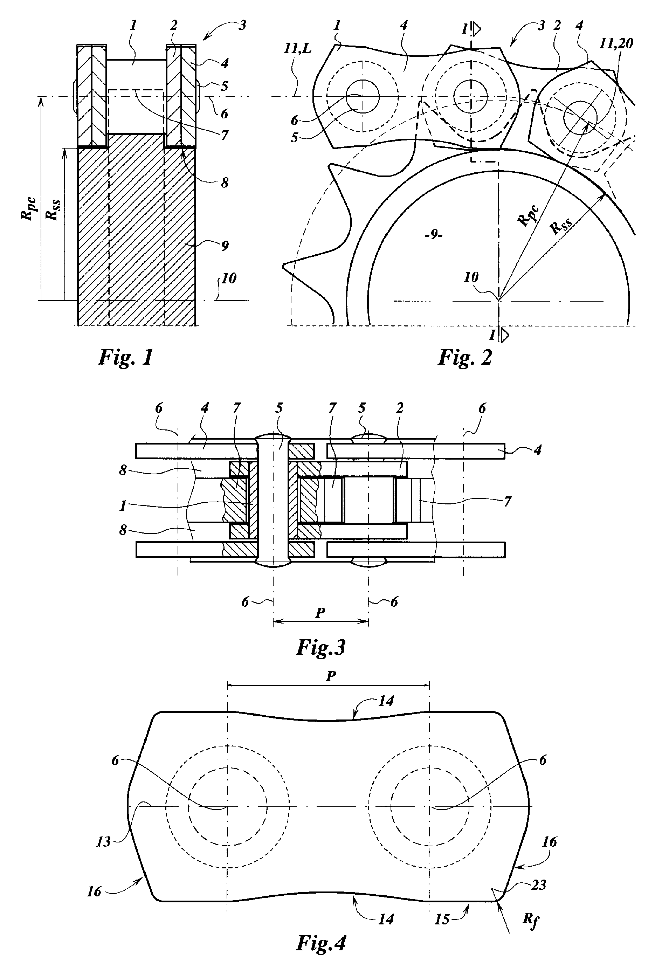

Figures 1, 2 and 3 show a chain 3 engaged with a sprocket wheel 9. The sprocket wheel 9 can rotate around a sprocket wheel axis 10 and is provided with chain teeth 7. On both sides of the chain teeth 7 the sprocket wheel 9 has a support surface 8 which supports the chain 3. The chain 3 is provided with inner link plates 2, between two inner links 2 there are two chain bushes 1 and together the inner link plates 2 and the chain bushes 1 form an inner link. Two inner links are connected by two outer link plates 4 using chain pins 5 whereby the inner link and the outer link plates 4 can swivel around a pin axis 6. The distance between two pin axes 6 is a pitch p. The sprocket wheel 9 has a number of teeth 7 which engage with the chain bushes 1 so that the pin axes 6 when positioned around the sprocket wheel 9 are on a pitch circle 20 with a pitch circle radius R_{pc}. The inner link plates 2 and the outer link plates 4 are supported on the support surface 8 which has a support surface radius Rₛₛ.

In the situation that the sprocket wheel 9 is part of a chain transmission the pin axes 6 follow a pin axis path 11. Around the sprocket wheel 9 this pin axis path 11 follows the pitch circle 20 and between two sprocket wheels 9 the pin axes 6 follow approximately a connecting line L which is the tangent line to the pitch circle 20 and which is also tangent to the pitch circle of a next sprocket wheel in the chain transmission.

For a skilled man it will be clear that the chain 3, which in the shown embodiment is formed by a single line of chain links, can be executed as single, a double or even more lines of chain links, known as simplex chains or as duplex chains, whereby the sprocket wheels 9 are designed accordingly. For maintaining the chain links in a straight line without torsion in the chain 3 and in order to limit the stress in the chain pins 5 in these types of chain the chain link plates 2 and 4 are supported by support surfaces 8 on both sides of the chain bush 1.

Figure 4 shows an outer circumference of a chain link 12 according to the prior art. The chain link 12 has in its longitudinal direction a chain link axis 13. At the end of a longitudinal side 14 the chain link 12 has a prismatic cam surface 15. Near the end of the chain link 12 the cam surface 15 is more or less parallel to the chain link axis 13 so that the pin axis 6 follows a more or less straight path when supported on the support surface 8 of the sprocket wheel 9 (see hereafter). At the end the chain link 12 has an end side 16 and between the cam surface 15 and the end side 16 the corner is rounded of by a fillet with a fillet radius R_{f} and a centre 23 of the fillet radius. In the shown embodiment all four corners of the chain link 12 have a cam surface 15. However if the chain 3 is used in a chain transmission with for instance two sprocket wheels it is possible to provide only one longitudinal side 14 at both ends with cam surfaces 15 and if the chain 3 moves only in one direction one cam surface 15 suffices.

The chain link 12 of the disclosed embodiment has a fillet radius R_{f} which is determined by the production method of the chain link 12. In the situation that the chain link 12 is punched with a punching die the fillet radius R_{f} determines the wear that occurs in this tool. For practical purposes the fillet radius R_{f} might be approximately 0,5 to 1,5 mm. Figure 4 shows a chain link 12 with a pitch of 8mm with a fillet radius R_{f} of 0,5 mm.

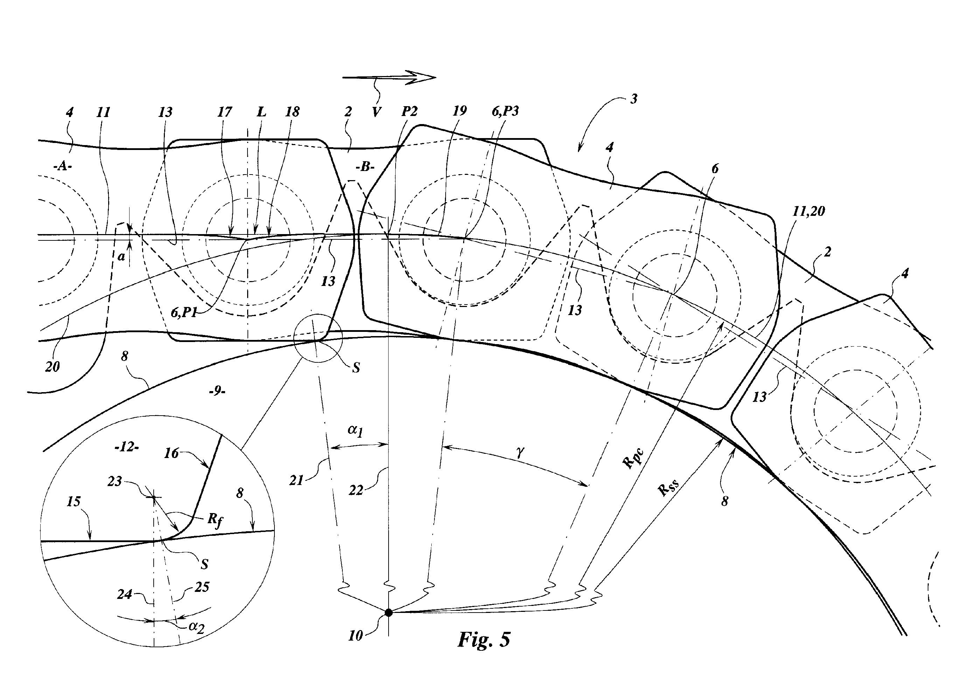

Figure 5 shows in more detail how the chain 3 with chain links 12 contacts the sprocket wheel 9. The figure 5 shows the situation where a chain link A with the outer link plate 4, shown in the figure at the left side, moves in a direction v towards the sprocket wheel 9. On the side away from the sprocket wheel 9 the chain link A is connected to a chain link that is free from the sprocket wheel 9 and on the other side the chain link A is connected to a chain link B with an inner link plate 2. The chain link B is partly supported by the support surface 8 so that its front pin axis 6 is at a position P3 approximately on the pitch circle 20.

During its movement in the direction v the front pin axis 6 of chain link B has followed the pitch circle 20 along a curve 19. This curve 19 starts at a tangent point P2 which is where a tangent line L to the pitch circles of two sprocket wheels coupled by the chain 3 ends on the pitch circle 20. Due to the tension in the chain 3 the hind pivot axis 6 of chain link B, which is equal to the front pivot axis 6 of chain link A, follows a curve 17 from the tangent line L in the direction of the support surface 8. The curve 17 is parallel to the curve 19 and causes the chain link A to move towards the support surface 8 until the cam surface 15 of the chain link plate 4 touches the support surface in a point of impact S. The common pivot axis 6 of the chain links A and B then is in a position P1. When the chain links A and B move further in the direction v, the common axis 6 moves along a curve 18 towards the tangent L to the pitch circles. The curve 18 is more or less parallel to the pitch circle 20. The support of the cam surface 15 of the chain link plates on the support surface 8 limits the chordal movement of the chain 3 between two sprocket wheels, in this case the maximum chordal movement is indicated as a chordal stroke a.

The point of impact S on the support surface 8 has a radial 21 from the sprocket wheel axis 10 and the tangent point P2 has a radial 22 from the sprocket wheel axis 10. The radial 21 and the radial 22 form an angle α₁. On the chain link the point of impact S has a perpendicular 25 on the surface of the chain link. The perpendicular 25 makes an angle α₂ with a line 24 perpendicular to the chain link axis 13. As the impact takes place on the surface of the fillet the centre 23 of the fillet radius is on the perpendicular 25. Due to the situation that at the moment of impact the chain link axis 13 is more or less perpendicular to the radial 22, the angle α₁ and the angle α₂ are more or less equal. If the number of chain links that can be fitted around the sprocket wheel 9 is z, then the pitch angle γ is equal to 360 degrees divided by z. It appeared that the angle α₁ is smaller than half of the pitch angle γ, and in most situations the angle α₁ is smaller than ten to fifteen degrees.

The fillet radius R_{f} is preferably as small as possible in order to have the cam surface 15 as large as possible towards the end side 16 of the link plate 12 in order to reduce the chordal stroke a. However a smaller fillet radius R_{f} increases the Hertz' contact stress at the point of impact S so that above certain speeds of the chain 3 or above certain axial chain forces plastic deformation or wear of the chain link plates might occur. Such deformation or wear leads to increased noise in the chain transmission and must be avoided. In order to reduce the risk of plastic deformation the radius at the point of impact S must be increased. The Hertz' contact stress is proportional to the reciprocal value of the square root of the radius. Therefore deformation and wear decrease significantly already with a limited increase in the radius. It has been found that the increased radius has to be applied over an angle that includes the angle α₁ but need not to be much more so that the cam surface 15 is only reduced locally and the chordal stroke a hardly increases.

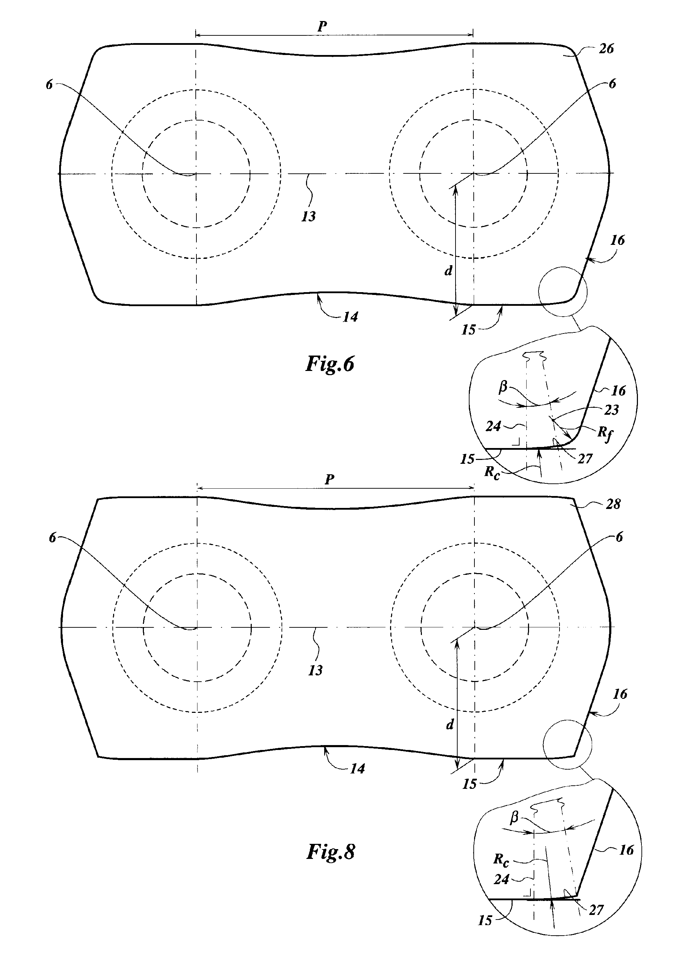

Figure 6 shows an embodiment of the invention whereby the outer circumference of a chain link 26 has an additional curve as compared to the chain link 12. Towards the end side 16 the cam surface 15 which is more or less parallel with the chain link axis 13 forms over a curve angle β a curve 27 with a curve radius R_{c} and then the cam surface ends as a fillet with the fillet radius R_{f} which ends on the end side 16 of the chain link 26. The curve angle β is larger than half the pitch angle γ or is larger than approximately ten to fifteen degrees. In the direction perpendicular to the chain link axis 13 the distance from the pin axis 6 to the surface of the cam surface 15 is a distance d. Preferably the curve radius R_{c} is equal or larger than half of the distance d so that it is significantly larger than the fillet radius R_{f}. By doing this the Hertz' contact stress is acceptable. In this embodiment the curve 27 is shown as a part of a circle, however it is also possible that the curve has another shape as long as its curvature radius is at least equal to the curve radius R_{c}.

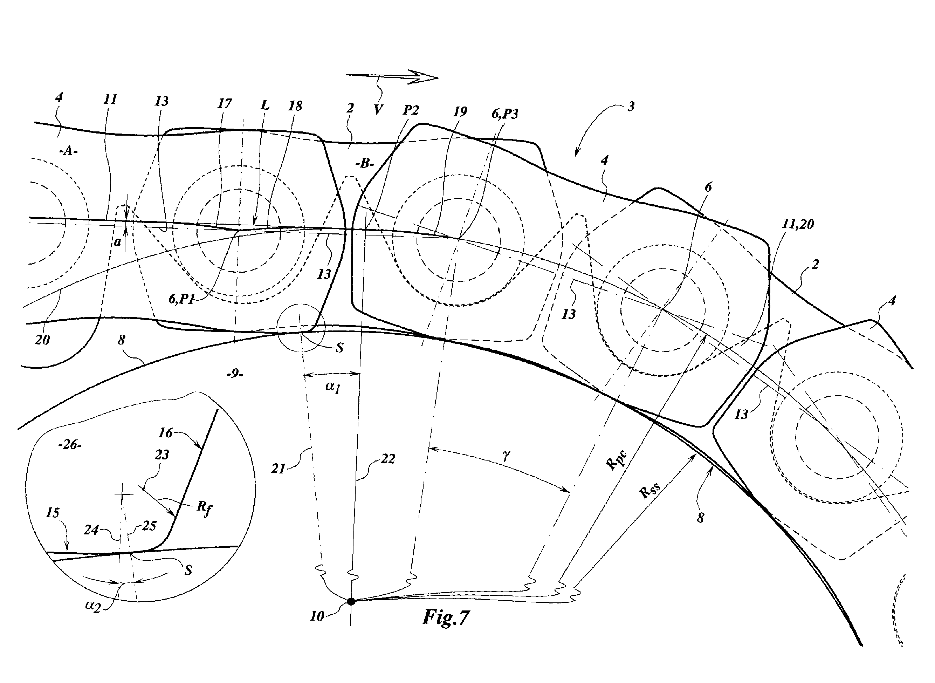

Figure 7 shows in a similar way as figure 5 the moment of impact of the chain link A on the support surface 8, whereby the chain 3 now has the chain links 26 as shown in figure 6. The perpendicular 25 to the surface at the point of impact S makes an angle α₂ with the perpendicular to the chain link axis 13. As this angle is smaller than the angle β the surface at the point of impact S has a radius R_{c} and the centre of the fillet radius 23 is in regard to the perpendicular 25 at the end side 16 of the link. The radius R_{c} at the point of impact S is sufficient large to avoid high Hertz' contact stress at the impact point S. Due to the limited angle β the chordal stroke a has hardly increased.

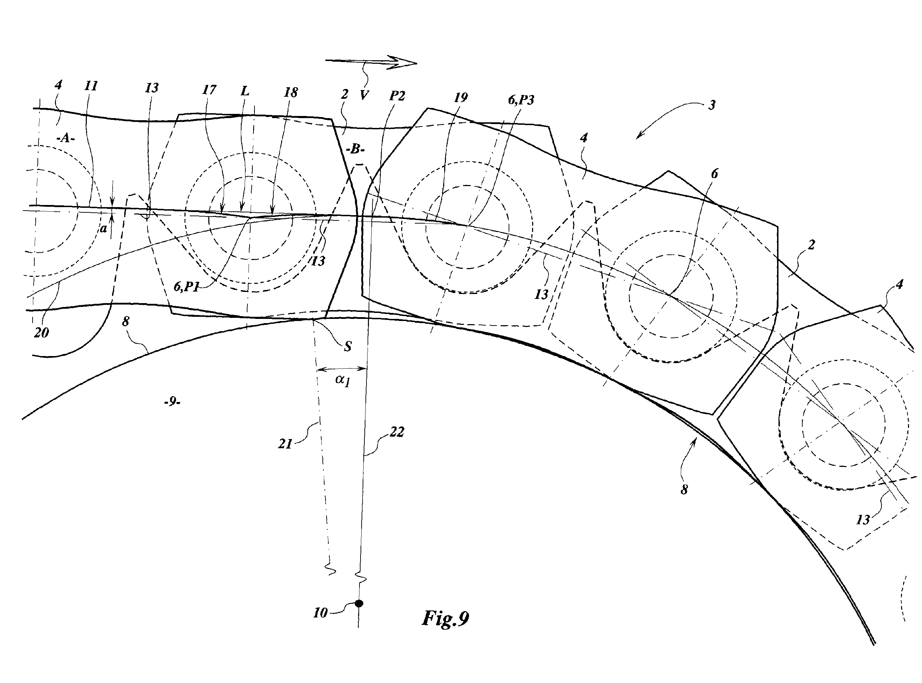

Figure 8 shows an embodiment of the invention whereby the outer circumference of a chain link 28 has an additional curve as compared to the chain link 12 in a similar way as in the embodiment of figure 6 and whereby there is no fillet connecting the curve 27 to the end side 16 of the link. Leaving out the fillet is possible when the chain link plates 28 are produced according an adapted process known to a skilled man, for instance sequential punching of the longitudinal and end sides of the chain link 28. Such a process might slightly increase production costs but has the advantage that the chordal stroke a is further reduced. Figure 9 shows the moment of impact of the chain link A on the support surface 8, whereby the chain 3 has the chain links 28 as shown in figure 8. Due to the avoidance of the fillet the chordal stroke a is further decreased as to compared to the chordal stroke as shown in figure 7 whereby the radius R at the point of impact S is similar.

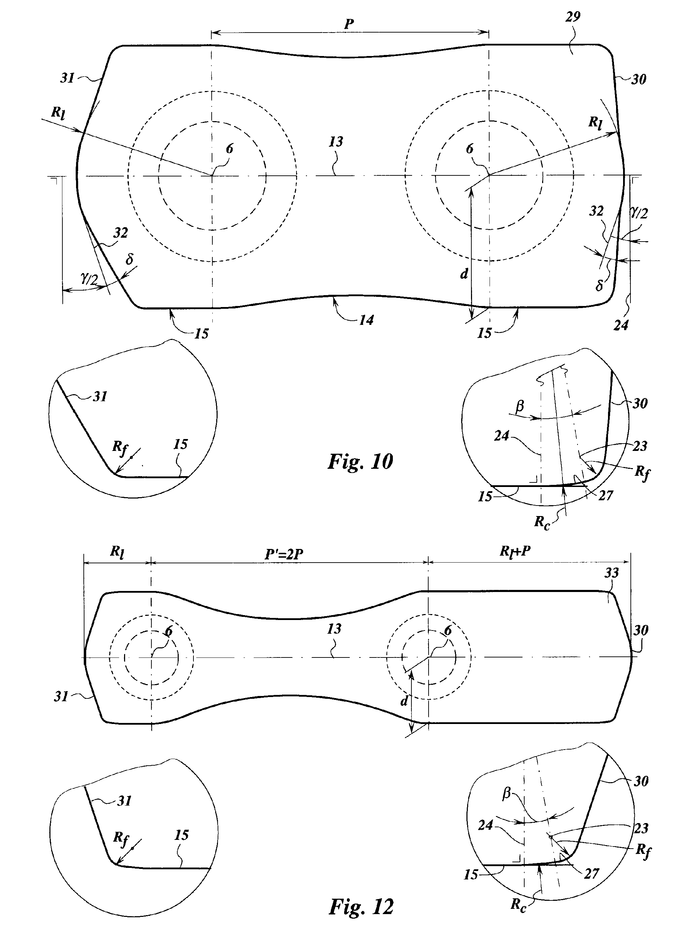

Figure 10 shows an embodiment of the invention whereby the outer circumference of a chain link 29 has an additional curve ending in a fillet as in the chain link 26. In order to reduce the chordal stroke in the chain link 29 has an increased length of the cam surface 15 on a front side 30 of the chain link 29 and a reduced length of the cam surface 15 on a hind side 31. This means that the chain link 29 is asymmetric. That the chain link 29 is asymmetric has as a consequence that the chordal stroke a is reduced only in one movement direction v and that in the opposite direction the chain will have a chordal movement that is the same as a chain transmission according to the prior art without cam surface 15. As long as the sprocket wheels rotate only in one direction this stronger chordal movement is in a part of the chain transmission where the chain links move away from the sprocket wheel and where no impact occurs. The stronger chordal movement does lead to unacceptable wear and vibrations.

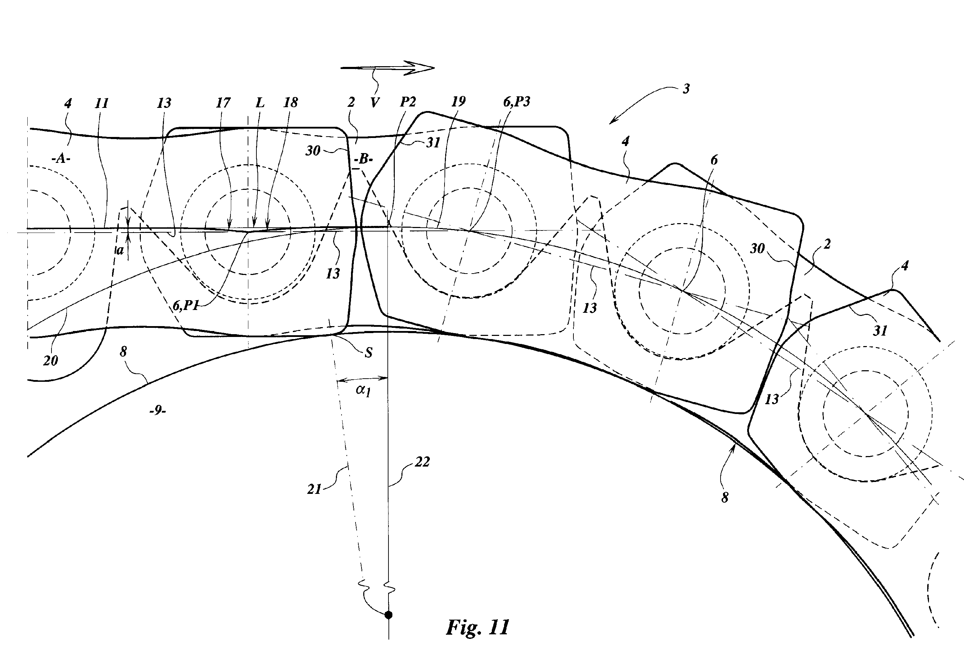

In the earlier described chain links the end sides 16 are near the chain link axis curved with a radius R₁ which continue towards the longitudinal sides 14 as tangent to this radius R₁ which makes an angle equal to half of the pitch angle γ with the perpendicular 24 on the chain link axis 13. The direction of this tangent is indicated with line 32 in figure 10. The radius R₁ is slightly smaller than half the pitch. In this way the symmetric links do not touch each other when positioned around the sprocket wheel 9. In order to get this same result with the asymmetric link 29 the front side 30 makes an angle with the perpendicular 24 which is an addendum angle δ smaller than half of the pitch angle γ and the hind side 31 makes an angle with the perpendicular 24 which is an addendum angle δ larger than half of the pitch angle γ. Near the cam surface 15 the front side 30 ends with a fillet with radius R_{f} and curve 27 in similar way as shown in figure 6. Near the cam surface 15 the hind side 31 ends with a fillet with radius R_{f} and there is no need for a curve 17 as the chain will only move in direction v. Figure 11 shows the moment of impact of the chain link A on the support surface 8, whereby the chain 3 has the chain links 29 as shown in figure 10. Due to the asymmetry the chordal stroke a is decreased as to compared to the chordal stroke as shown in figure 7 whereby the radius R_{c} at the point of impact S is similar.

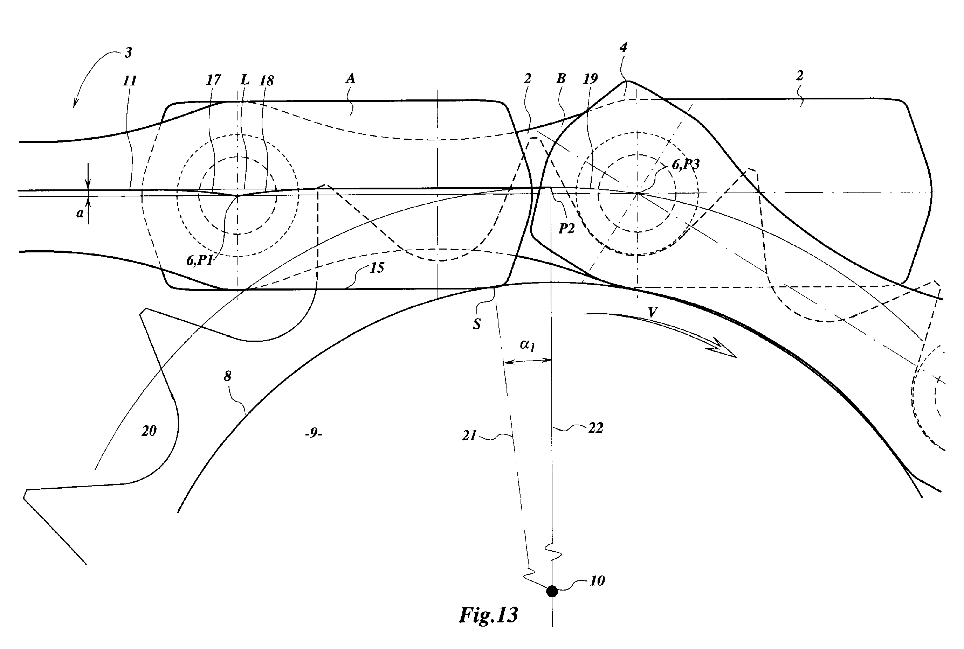

Figure 12 shows another embodiment in accordance with the invention. An asymmetric chain link 33 has a pitch p' which is the length of the pitch p of the earlier shown embodiments plus an additional length p and the same width so that the maximum transmission force in the chain is more or less equal using half the number of chain links. Also the support surface 8 and the number of chain teeth 7 of the sprocket wheel 9 is similar, whereby only every other tooth is used. The same effect can also be obtained by using a sprocket wheel with a reduced number of teeth. The distance between the front side 30 and the front pin axis 6 is also increased with p. The distance between the hind side 31 and the hind pin axis 6 is not changed. Towards the front side 30 the cam surface 15 ends in the curve 27 and the fillet with radius R_{f}, towards the hind side 31 the cam surface 15 ends with the fillet R_{f}. Figure 13 shows a chain 3 with link plates 33 shaped as described in figure 12. Due to the use of the asymmetric shape of the link plates 33 the chordal stroke a is small, thereby making cost saving possible due to the reduced number of chain pins 6 and chain bushes 1 without increase in vibrations.

In the discussed embodiments sprocket wheels 9 with chain teeth 7 are shown. It will be clear that in order to reduce the chordal movement on the sprocket wheels only the support surface 8 is essential. In situations where wheels are used as guide wheels without teeth the same reduction in chordal movement is obtained using the support surface 8 and the cam surface 15 on the chain links.

## Claims

1. Chain transmission comprising a chain (3) with chain bushes (1) having parallel pivot axes (6), on both sides of each chain bush two link plates (2,4) for coupling each chain bush to the former chain bush and the next chain bush using chain pins (5), the chain pins forming pivot axes (6) for the link plates (12; 26; 28; 29; 33) which each have two pivot axes at a pitch distance (p; p') and a link axis (13) which perpendicularly intersects the two pivot axes, said link plates having towards an end side (16) of the link plate a cam surface (15) more or less parallel to the link axis, the chain transmission further comprising a sprocket wheel (9) having a at least two cylindrical support surfaces (8) for supporting the prismatic cam surfaces of the chain links on both sides of the chain bush, **characterized in that** the cam surface (15) ends in a convex curved plane (27) with near the end side (16) an increasing slope angle (β) with the link axis whereby the slope angle is from zero to approximately ten to fifteen degrees.

2. Chain transmission according to claim 1 whereby the convex plane has a radius of curvature (R_{c}) that is approximately equal to or larger than half of a distance (d) from the pivot axis (6) to the cam surface in a direction perpendicular to the link axis (13).

3. Chain transmission according to claim 2 whereby the radius of curvature (R_{c}) is at least the width of a link plate (12; 26; 28; 29; 33).

4. Chain transmission according to claim 1,2 or 3 whereby the cam surface (15) ends in a corner with the second leg of the corner forming an end side (16) of the link plate (12; 26; 28; 29; 33).

5. Chain transmission according to claim 1, 2 or 3 whereby the cam surface (15) ends in a rounded corner with a fillet radius (R_{f}), which fillet radius preferably is at least 0,5 - 1,5 mm.

6. Chain transmission according to one of the previous claims whereby the cam surfaces (15) at the different end sides (16) of a chain link have different lengths.

7. Chain transmission according to one of the previous claims whereby the cam surface is for a part of its length parallel to the chain link axis.
